# EUROPEAN PATENT APPLICATION

(11) **EP 3 588 414 A1**
(43) Date of publication of application: **01.01.2020**
(21) Application number: 18180467.5
(22) Date of filing: 28.06.2018
(51) Int. Cl.: G06Q 20/34, G06Q 20/32

(54) **AGGREGATED TRANSACTION PROCESSING**

(71) Applicant: MASTERCARD ASIA/PACIFIC PTE. LTD., Singapore (189352) (SG)
(72) Inventor: UZEBU, Uwagbae, 13144 Lagos (NG)
(74) Representative: Gill Jennings & Every LLP

(57) **Abstract**

A method performed at an aggregation server comprises allocating, in a merchant database, a virtual card number to a plurality of merchants, each merchant being assigned a merchant identifier, the virtual card number being associated with a settlement account maintained by an acquirer processor system. The method further comprises receiving, from one or more issuer processor systems which maintain payment card accounts, a plurality of confirmation messages each indicating a successful payment to the virtual card number from one or more of the payment card accounts, each confirmation message including a merchant identifier of one of the plurality of merchants; determining a merchant account for each merchant based on the respective merchant identifiers from the confirmation messages; and submitting a batch settlement request message to the acquirer processor system to initiate a transfer of funds from the settlement account to respective merchant accounts based on the respective merchant account identifiers.

## Description

### Background

The present disclosure relates to methods and systems for conducting mobile transactions.

In many economies, credit and debit card payments have been used side by side with cash transactions for several decades. Over recent years, payment with mobile user devices such as smartphones, tablets and smartwatches has also become familiar to many consumers, especially in cities.

There is generally a desire among merchants in developing economies to be able to accept electronic payments. Many of those merchants have existing bank accounts that they use to pay suppliers or other creditors, or to receive remittances. However, there can be challenges in enabling card-based payments, especially for smaller merchants, since this requires investment in card-acceptance infrastructure such as point-of-sale terminals and communications infrastructure for enabling the terminals to connect to a card processing system (the acquirer processor system) at the merchant's bank (the acquirer).

Although some mobile payment technologies have been developed to address the above need, these still necessitate the acquirer processor system to process transactions made at each of those merchants. In the case of small merchants this may mean a large number of low-value transactions being processed. In large developing economies with many small merchants, there is therefore not only a significant administrative burden in managing contractual relationships with a multitude of merchants, but also a significant technological burden in terms of storage and processing requirements for merchant- and transaction-related data, and communication of data to and from respective merchants.

The present invention seeks to alleviate one or more of the above difficulties, or at least to provide a useful alternative.

### Summary

In a first aspect, the present disclosure relates to a method comprising, at an aggregation server:
allocating, in a merchant database, a virtual card number to a plurality of merchants, each merchant being assigned a merchant identifier, the virtual card number being associated with a settlement account maintained by an acquirer processor system;
receiving, from one or more issuer processor systems which maintain payment card accounts, a plurality of confirmation messages each indicating a successful payment to the virtual card number from one or more of the payment card accounts, each confirmation message including a merchant identifier of one of the plurality of merchants;
determining a merchant account for each merchant based on the respective merchant identifiers from the confirmation messages; and
submitting a batch settlement request message to the acquirer processor system to initiate a transfer of funds from the settlement account to respective merchant accounts based on the respective merchant account identifiers.

In some embodiments, the method further comprises receiving, from a merchant device, a request to create an account at the aggregation server.

The method may comprise generating a new merchant identifier for the merchant device, and allocating the virtual card number to the new merchant identifier in the merchant database.

In another aspect, the present disclosure relates to a method, comprising:
providing, at an aggregation server, a merchant database comprising a mapping of a virtual card number to a plurality of merchants, each merchant being assigned a merchant identifier, the virtual card number being associated with a settlement account maintained by an acquirer processor system;
generating, at a computing device, a payment request message comprising the virtual card number, a selected merchant identifier of said merchant identifiers, and a payment card account number;
transmitting, from the computing device, the payment request message to effect a transfer from the payment card account to the virtual card number;
responsive to receipt of a payment authorisation response message indicating a successful transfer, transmitting, to the aggregation server, a confirmation message indicating a successful payment to the virtual card number from the payment card account, the confirmation message including the selected merchant identifier;
determining a merchant account based on the merchant identifier from the confirmation message; and
submitting a settlement request message to the acquirer processor system to initiate a transfer of funds from the settlement account to the merchant account.

The settlement request message may be a batch settlement request message which is submitted after receipt of a plurality of confirmation messages, respective confirmation messages comprising respective merchant identifiers.

The method may further comprise:
generating or otherwise providing a machine-readable code which encodes first partial payment data;
reading, in a secure environment at the computing device, the machine-readable code;
accessing, at the computing device, second partial payment data which are distinct from the first partial payment data;
wherein the payment request message is generated from the first partial payment data and the second partial payment data.

In some embodiments, the machine-readable code is generated by a merchant device and the first partial payment data comprises the virtual card number and the selected merchant identifier of said merchant identifiers.

In some embodiments, the machine-readable code is generated by a user device and the first partial payment data comprises the payment card account number.

In a further aspect, the present disclosure relates to a non-transitory computer-readable medium having stored thereon computer-readable instructions which, when executed by at least one processor, cause the at least one processor to carry out a method according to any of the preceding paragraphs.

In a further aspect, the present disclosure relates to an aggregation server comprising at least one processor and a memory storing computer-readable instructions which, when executed, cause the at least one processor to:
allocate, in a merchant database, a virtual card number to a plurality of merchants, each merchant being assigned a merchant identifier, the virtual card number being associated with a settlement account maintained by an acquirer processor system;
receive, from one or more issuer processor systems which maintain payment card accounts, a plurality of confirmation messages each indicating a successful payment to the virtual card number from one or more of the payment card accounts, each confirmation message including a merchant identifier of one of the plurality of merchants;
determine a merchant account for each merchant based on the respective merchant identifiers from the confirmation messages; and
submit a batch settlement request message to the acquirer processor system to initiate a transfer of funds from the settlement account to respective merchant accounts based on the respective merchant account identifiers.

In some embodiments, the at least one processor is configured to receive, from a merchant device, a request to create an account at the aggregation server.

The at least one processor may be configured to generate a new merchant identifier for the merchant device, and to allocate the virtual card number to the new merchant identifier in the merchant database.

In a yet further aspect, the present disclosure relates to a system, comprising:
a computing device which is configured to:
generate a payment request message comprising a virtual card number, a selected merchant identifier of said merchant identifiers, and a payment card account number; and
transmit, to a payment network via an acquirer processor system or an issuer processor system, the payment request message to effect a transfer from the payment card account to the virtual card number; and an aggregation server comprising:
   at least one processor; and
   a merchant database comprising a mapping of a virtual card number to a plurality of merchants, each merchant being assigned a merchant identifier, the virtual card number being associated with a settlement account maintained by an aggregator acquirer processor system;
   wherein the at least one processor is configured to:
      receive a confirmation message indicating a successful payment to the virtual card number from the payment card account, the confirmation message including the selected merchant identifier;
      determine a merchant account based on the merchant identifier from the confirmation message; and
      submitting a settlement request message to the aggregator acquirer processor system to initiate a transfer of funds from the settlement account to the merchant account.

The aggregation server may be configured to submit a batch settlement request message after receipt of a plurality of confirmation messages, respective confirmation messages comprising respective merchant identifiers.

### Brief description of the drawings

Embodiments of the present invention are described below, by way of example only, with reference to the accompanying figures in which:
Figure 1 shows an exemplary system for aggregated transaction processing;
Figure 2 shows an embodiment of an aggregator server of an aggregator system according to certain embodiments;
Figure 3 shows an example architecture of an aggregator financial institution processing server;
Figure 4 shows an example of a merchant device usable with the system of Figure 1;
Figure 5 shows an example of a user device usable with the system of Figure 1;
Figure 6 is a flow diagram of a merchant registration process according to certain embodiments;
Figures 7A and 7B show a process flow of an aggregated transaction process according to certain embodiments; and
Figure 8 is a flow diagram of a settlement process according to certain embodiments.

### Detailed description

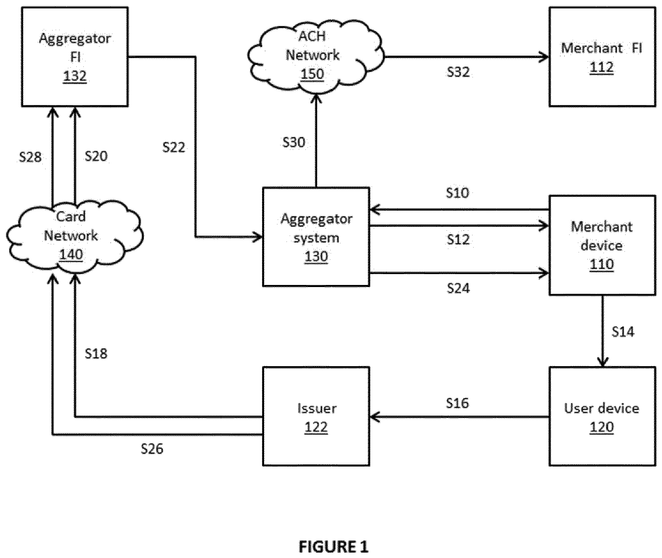

Referring initially to Figure 1, there is shown a system 100 comprising an aggregator system 130 which is in communication with a merchant device 110. The aggregator system 130 enables registration and maintenance of merchant accounts, such as an account associated with the merchant device 110. In practice, a large number of merchant devices 110 will access the aggregator system 130, but only one is shown here for simplicity.

The aggregator system 130 has at least one settlement account maintained at an aggregator financial institution (FI) server 132. The settlement account is used to receive payments from users of mobile devices 120, and to subsequently transfer funds to respective accounts of merchants via the merchants' financial institutions 112 (again, only one merchant financial institution is shown, but it will be appreciated that in general, different merchants may hold accounts at different financial institutions). The aggregator system 130 may request one or more virtual card numbers from aggregator FI server 132. Each of the virtual card numbers may be associated with one of the settlement accounts maintained at the aggregator FI server 132.

A virtual card number (VCN), as referred to herein, is an alphanumeric identifier which has a format which is identifiable by a card network such as Mastercard, Visa or American Express for the purpose of switching and otherwise processing transactions that rely on such numbers to identify the party making (or receiving) a payment, but which is never associated with a specific payment device (such as by appearing on the face of a payment card or being encoded on a chip or magnetic stripe of such a card). For example, a virtual card number may be a 16-digit primary account number (PAN) in which the first 6 digits are a bank identification number (BIN) (also called an issuer identification number, IIN) used by the card network to identify and route a transaction authorisation request to the issuer of the virtual card number.

Aggregator FI server 132 may comprise, or be in communication with, a virtual card number module (not shown) which receives requests for virtual card number issuance, generates virtual card numbers in accordance with the requests, and optionally applies one or more card controls to respective virtual card numbers. For example, on receipt of a virtual card number request from an aggregator 130, the virtual card number module may generate a VCN, create a database record to store the VCN in association with the aggregator's settlement account, and add one or more transaction rules to the database record, which are referenced by the aggregator FI server 132 during processing of a transaction. In one example, a transaction rule may be a restriction that the VCN may only be used for incoming payments, i.e. the VCN may not be used to make a payment which uses the aggregator's settlement account as a source of funds. In another example, a transaction rule may restrict the number of transactions that can be received, such as over a given time period. A transaction rule of this nature may be used to manage the burden on the payment network, for example.

By associating a VCN with an aggregator, which in turn maintains accounts on behalf of merchants, it is possible for merchants to receive payments using existing payment network infrastructure without them needing to set up an account with a financial institution. Payment can be transmitted to the aggregator's VCN using existing high-speed payment network mechanisms and the aggregator may then transmit payment to the merchant by a number of means, such as remittance to a mobile money wallet, or ACH-based payment to the merchant's bank account if they have one.

As part of a registration process, which will be described below in more detail, a merchant user at merchant device 110 sends a request at S10 to the aggregator system 130, typically via a merchant application (app) over a public network such as the Internet. The merchant device may be a smartphone or tablet computing device, for example. The aggregator system 130 creates an account for the merchant, including a merchant identifier, and maps the merchant identifier to a merchant account number entered by the merchant. The merchant account number maps to an account maintained by merchant FI 112 to enable the merchant to receive funds following completion of one or more transactions. As part of the registration process, the aggregator system 130 also maps a virtual card number to the merchant's account. Advantageously, a single virtual card number may be mapped to a plurality of merchants. This not only minimises the cost of virtual card issuance, but also results in reduced data storage requirements, since the table or other data structure which stores the relationship between virtual card number(s) and merchant identifiers needs to record only a one-to-many or few-to-many mapping, rather than a one-to-one mapping.

Additionally, the aggregator system 130 may generate a machine-readable code which encodes at least the virtual card number and the merchant identifier. The machine-readable code may be an optical code such as a 1-dimensional barcode or a matrix barcode such as a QR code. Once generated, the aggregator system 130 transmits the machine-readable code to the merchant device 110 at step S12. This enables the merchant device to present the machine-readable code to users 120 for the purposes of initiating a transaction. Alternatively, or in addition, the merchant app may enable printing of the machine-readable code (in the case of an optical code such as a QR code) such that it can be displayed in premises of the merchant for scanning by a user.

In some embodiments, generation of the machine-readable code may be delegated by the aggregator system 130 to the merchant app executing on merchant device 110. The aggregator system may transmit the virtual card number and merchant identifier to the merchant device 110, and the merchant app may supply the virtual card number and merchant identifier (optionally with additional information such as merchant name and address) as inputs to an optical code generator, which may be configured to generate optical codes in accordance with the EMV QR Code Specification for Payment Systems: Merchant-Presented Mode, for example (available at www.emvco.com).

From time to time, changes to payment infrastructure, such as the format of a payment-related QR code, may occur. If so, then advantageously, the aggregator system 130 may push an over-the-air update to the merchant device 110, or may send a notification to the merchant device 110 to download an update to the merchant app, in order to ensure continued interoperability of the merchant device 110 with the aggregator system 130, and thus with the payment network 140. Accordingly, such updates are far simpler and more cost-effective to implement than updates to standard point of sale infrastructure such as POS terminals.

In another example, the machine-readable code may be generated on request as part of a transaction process. For example, the merchant app executing on merchant device 110 may generate the machine-readable code, which may include transaction-specific information such as a transaction amount. Alternatively, the machine-readable code may be requested from the aggregator system 130 by the merchant app, which transmits the transaction-specific information as part of a request message to the aggregator system 130. The aggregator system 130 then generates the machine-readable code, for example in accordance with the EMV QR Code Specification for Payment Systems: Merchant-Presented Mode, as mentioned above, and transmits it to the merchant device 110.

Once a merchant 110 is registered with the aggregator system 130, the merchant 110 is able to accept electronic payments via the virtual card number to which the merchant's account is mapped. The transaction flow is explained in more detail below, but briefly, a user device 120 scans or otherwise reads the machine-readable code of the merchant, for example a QR code presented on the display of merchant device 110, at S14. An amount of the transaction may be encoded in the QR code as mentioned above, or may be manually entered by the user at user device 120.

The user device 120 typically initiates transaction requests within a secure application such as a mobile banking application or mobile wallet application. The mobile banking application or wallet may store, or otherwise securely provide access to, one or more account numbers of the user, such as a primary account number (PAN) of a payment card of the user, or a bank account number. To improve security, rather than storing the PAN or bank account number, the secure application may instead store a proxy for the PAN or bank account number, known as a token. The mapping of the token to the actual account number is known only to a token service provider (which may be a payment network) which operates a token vault securely storing the mapping. The token may have the same format as the actual account number, and thus be recognised by the payment network as an account identifier that can be used in a transaction. During an authorisation request, the token is forwarded to the token service provider to obtain the actual account number associated with the token.

In one embodiment, the secure application uses one of the account numbers (or a token mapped to the account number) to form an authorisation request message which is then sent (S16) from user device 120 to issuer 122, which is the financial institution that maintains the account corresponding to the account number nominated by the user. If sufficient funds are available in the consumer's account, the issuer 122 sends (S18, S20) an authorisation message to aggregator FI 132 via card network 140. The aggregator FI 132 then sends (S22) an approval notification to the aggregator system 130, which in turn sends (S24) the approval notification to merchant device 110. The aggregator system 130 also maintains a record of all approved transactions, including the amount and merchant identifier of each transaction, so that the total amount owed to the merchant over a certain time period (e.g., a day) can be computed.

In another embodiment, the flow of which is not shown in Figure 1, the secure application uses one of the account numbers (or a token mapped to the account number) to generate payment data, including the account number or token, which is encoded in a QR code (for example, according to the EMV QR Code Specification for Payment Systems: Consumer-Presented Mode). The QR code is then scanned by the merchant device 110. The merchant app then sends a payment authorisation request to the aggregator 130, including the account number or token, and a payment amount. The aggregator 130 sends, in turn, an authorisation request to aggregator FI 132, which routes it to card network 140. Card network 140 forwards the request to the issuer 122 of the user's account number. In the case of a token being transmitted to the card network 140, the token is first transmitted to a token service provider to determine the actual account number to which the token is mapped. If sufficient funds are available in the consumer's account, the issuer 122 sends an authorisation response message to aggregator FI 132 via card network 140. The aggregator FI 132 then sends an approval notification to the aggregator system 130, which in turn sends the approval notification to merchant device 110. The aggregator system 130 also maintains a record of all approved transactions, including the amount and merchant identifier of each transaction, so that the total amount owed to the merchant over a certain time period (e.g., a day) can be computed.

During each of the payment flows described above, when an authorisation request is approved, the card network 140 may transmit a clearing message to a clearing system of the card network 140. The clearing message typically includes all the information necessary to post the transaction to the cardholder's account.

Following completion of the authorisation request and notification to the aggregator 130 and the merchant 110, on a periodic basis (such as at the end of a day), a settlement process can be conducted, in which transactions which have been captured by the clearing system of the card network 140 are processed to determine the net position between the issuer 122 and aggregator FI 132. Subsequently, issuer 122 sends a batch payment S26 for aggregator FI 132 to card network 140. The card network 140 subsequently passes this on at S28 to aggregator FI 132. Finally, aggregator FI 132 posts funds to the aggregator's account.

The aggregator system 130 determines, based on the amounts and merchant identifiers of stored transaction records, the total amount owing to each merchant, and initiates a batch transfer of funds to the respective merchants. Because aggregator system 130 obtains bank account details for each merchant at the time of registration as noted above, aggregator system 130 may initiate a payment (at S30) from its bank account held at aggregator FI 132, to the merchant's bank account held at merchant FI 112, via automated clearing house (ACH) network 150 (at S32). The aggregator to merchant settlement process may occur after the issuer to aggregator settlement process described above, or may optionally be initiated prior to the issuer to aggregator settlement process is completed (or even before it begins, provided the aggregator system 130 has received approved transaction messages).

Advantageously, therefore, merchants are able to receive card-based payments into their existing bank accounts, without the merchant FI 112 or merchant 110 needing to deploy and maintain additional card acceptance infrastructure. Additionally, the majority of the transaction processing load may be handled by card network 140 and aggregator FI 132, with minimal involvement from merchant FI 112 or merchant 110.

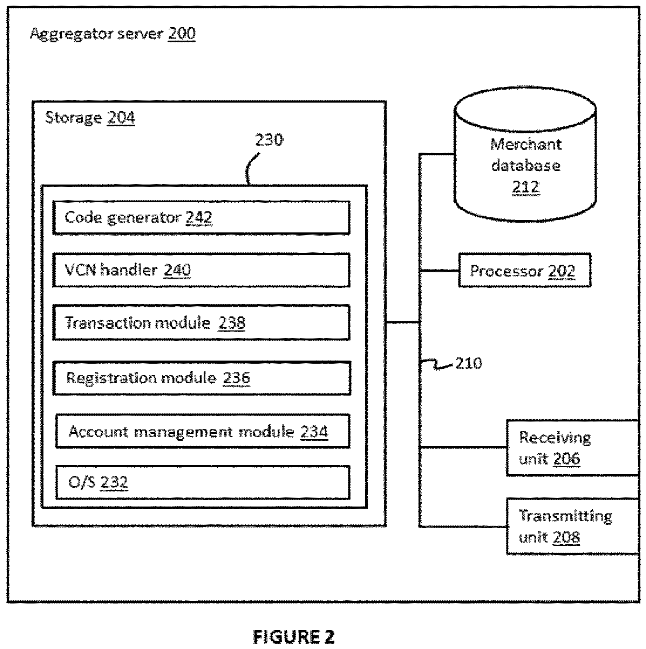

Turning now to Figure 2, the architecture of aggregator system 130 will be described in more detail. In one form, the aggregator system 130 may comprise a server or a server farm configured to receive and process requests from merchant devices, and to communicate with one or more financial institution servers such as those of aggregator FI 132, in the manner described broadly above and in more detail below. An architecture of a single server 200 is depicted in Figure 2 but it will be understood that the architecture shown may be that of a single node of a server farm.

Aggregator server 200 comprises at least one processor 202, a storage unit 204, a receiving unit 206 for receiving data from one or more remotely located devices over a network (e.g., a public network such as the Internet, or a local area network), and a transmitting unit 208 for transmitting data to the one or more remotely located devices, all interconnected by a bus 210. In one form, the receiving unit 206 and transmitting unit 208 may be components of a single network interface module.

Aggregator server 200 also comprises, or is in communication with, a merchant database 212. The merchant database 212 may be resident on storage unit 204, or may (as shown) be resident on a separate physical or logical storage unit of the server 200. In an alternative embodiment, the merchant database 212 is resident on a remotely located server with which aggregator server 200 communicates via receiving and transmitting units 206, 208. The merchant database 212 stores records relating to merchants 110, including merchant name and address details, merchant identifier, merchant device identifier, merchant bank account details, and transaction data relating to transactions conducted with merchants 110.

Storage unit 204 has stored thereon a plurality of software modules including an operating system 232 (such as Microsoft Windows or Linux), account management module 234, registration module 236, transaction module 238, VCN handler 240, and code generator 242. Account management module 234 creates and maintains merchant profiles by writing to and reading from merchant database 212, and may also be responsible for pushing software and data updates to merchant devices 110. Registration module 236 manages the onboarding of merchants (for example, as described with reference S10 and S12 of Figure 1). Transaction module 238 is responsible for functions relating to issuer-to-aggregator settlement and aggregator-to-merchant settlement. VCN handler is responsible for requesting virtual card numbers from aggregator FI 132, and assigning them to merchant identifiers in merchant database 212. Code generator 242 generates machine-readable codes, such as QR codes, assigns them to merchants in merchant database 212, and transmits them to merchant devices 110.

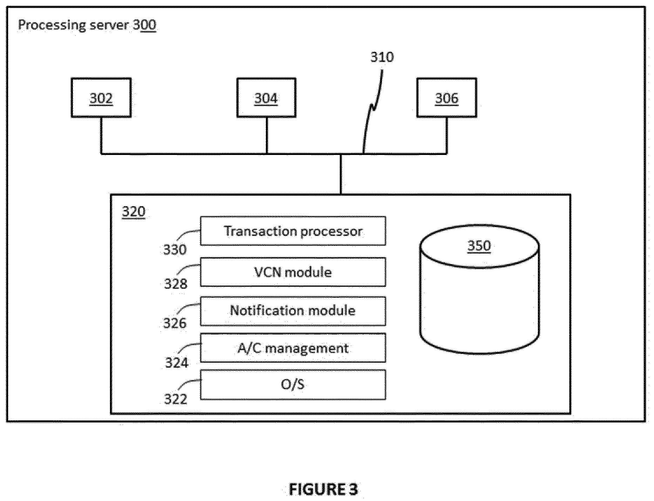

An example architecture of a processing server 300 of the aggregator financial institution 132 is shown in more detail in Figure 3. Processing server 300 comprises at least one processor 302, volatile storage (RAM) 304, at least one network interface 306, and non-volatile storage (e.g., one or more magnetic disks and/or one or more solid-state drives) 320, all interconnected by a bus 310.

The non-volatile storage 320 has stored thereon a plurality of modules, including operating system 322, account management module 324, notification module 326, VCN module 328 and transaction processor module 330. Also stored on non-volatile storage 520 is a user account database 350. The user database 550 stores account data, which may include, for each user, at least one account number, a corresponding balance or line of credit for each account number, at least one device identifier for devices associated with the user (for example, merchant device 110), and particulars of the user such as address, telephone number, email address and so on.

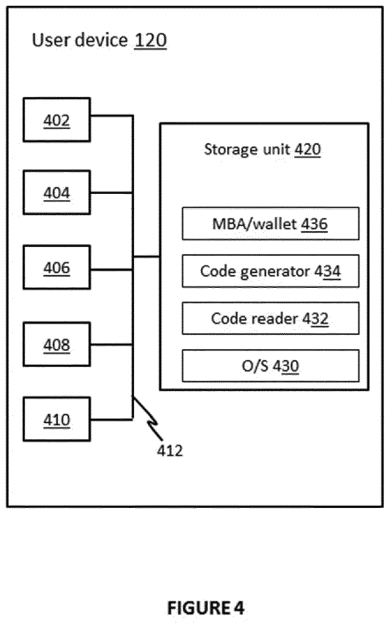

Turning now to Figure 4, there is shown an example of a user device 120, including at least one processor 402, volatile storage (RAM) 404, at least one network interface 406, a camera 408, a display 410 (which may also function as a user input interface), and non-volatile storage 420, all interconnected by a bus 412. Stored on non-volatile storage 420 are a number of software modules, including operating system 430 (e.g., iOS™ or Android™), code reader module 432, code generator module 434, and a secure communication module, such as a mobile banking application or digital wallet application 436, each of which is configured to cause the at least one processor 402 to perform one or more functions.

The code reader module 432 is configured to receive and interpret encoded data, such as a QR code or other optical code captured by the camera 408, or other machine-readable encoded data captured by a network interface 406 (e.g., a near field communication (NFC) or Bluetooth interface) in order to extract information which is needed to initiate a payment request at the issuer 122.

The code generator module 434 is configured to generate machine-readable codes, such as QR codes, which can be read by a merchant device 110 in order to initiate a transaction. For example, the code generator module 434 may be invoked by secure communications module 436 to generate a QR code in accordance with the EMV® QR Code Specification for Payment Systems: Consumer Presented Mode. The payload of the QR code typically includes payment token credentials (provided by the secure communications module 436) and other data, such as an Application Identifier (e.g., Mastercard Credit or VISA Debit) which can be used by the merchant device 110 to generate, or cause to be generated by aggregator system 130, an appropriate authorisation request message for transmission to card network 140.

The secure communications module (e.g. mobile banking application) 436 is configured to open a secure communication channel with the issuer 122 in order to securely receive data from, and transmit data to, the issuer 122 via one of the at least one network interfaces 406. As mentioned above, it may also be configured to invoke code generator module 434 to allow payment requests to be initiated via the merchant device 110, rather than via the issuer 122.

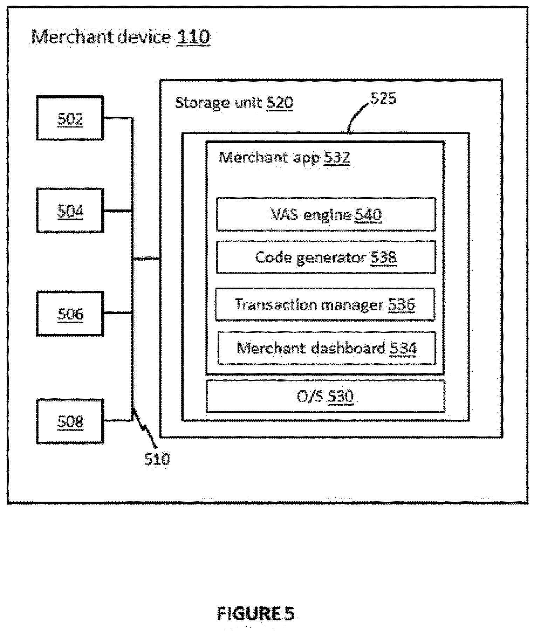

Turning to Figure 5, an exemplary merchant device 110 comprises at least one processor 502, volatile storage (RAM) 504, a display 506 (which may be a touch-screen interface, thereby also acting as an input device, though it will be appreciated that one or more separate input means such as a keyboard, mouse, stylus or touchpad may be provided), and non-volatile storage 520, all interconnected by a bus 510. The merchant device 110 further comprises at least one, and preferably more than one, communications interface 508, such as a Bluetooth interface, NFC controller, or GSM or EDGE interface, for example.

Stored on non-volatile storage 520 of the merchant device 110 are a number of software modules 525 including an operating system (such as Apple iOS™ or Android™) 530, and a merchant application (app) 532. The merchant app 532 includes a plurality of components including merchant dashboard 534, transaction manager 536, code generator 538, and value added services (VAS) engine 540. The software modules 525 may, of course, alternatively be implemented as hardware modules (in which case they would be separate from the non-volatile storage 520), or as a combination of hardware and software.

Merchant app 532 manages registration of merchant device 110 with the aggregator system 130, and also enables the merchant to communicate with the aggregator system 130 in order to receive payment notifications (via transaction manager component 536), view transaction history and summary statistics of activity on the merchant's account (via merchant dashboard component 534), and implement and/or access value-added services, such as loyalty and rewards (via VAS engine 540). In some embodiments, the merchant app 532 may provide cash-out functionality, such as by generating a token for cardless withdrawal at an ATM, or by scanning the QR code of an agent which provides a cash-out service. Cardless ATM withdrawals and cash-out agents are both known to those skilled in the art and will not be described in further detail herein.

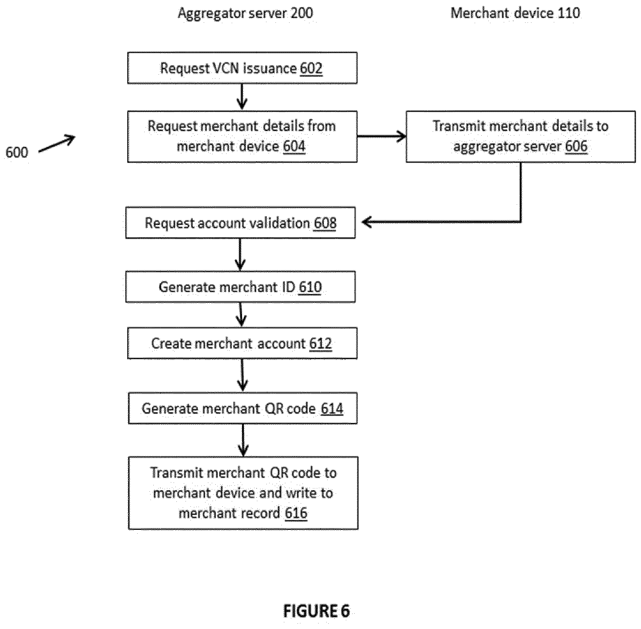

Turning now to Figure 6, there is shown a merchant registration process 600 which may be carried out by an aggregator server 200 of aggregator system 130 in communication with a merchant device 110.

At step 602, VCN handler 240 of aggregator server 200 requests the issuance of one or more virtual card numbers (VCNs) from aggregator FI 132. This is typically done prior to registration of any merchants at the system 130. Alternatively, VCN handler 240 may request issuance of a virtual card number when it receives a merchant registration request. This might be done after a certain number of merchants have already been assigned to an existing VCN in merchant database 212, for example.

On receiving a registration request from merchant device 110 via receiving unit 206, registration module 236 of aggregator server 200 transmits, via transmitting unit 208 to the merchant device 110, a request to provide merchant details (step 604). The request may be presented by merchant app 532 as a form comprising a series of fields to be completed by the merchant. Typically, the fields will include at least a merchant name, merchant bank details (the name or other identifier of the merchant's bank, and the bank account number), and merchant contact details such as mobile phone number and email address. Once completed, the merchant device 110 transmits the registration data to aggregator server 200 (step 606).

The receiving unit 206 of aggregator server 200 receives the registration data and this is then provided to registration module 236. Registration module 236 parses the registration data and may optionally transmit (step 608) a request to the merchant's bank 112, or to a third party account validation service (such as Experian), to confirm the validity of the account details provided by the merchant. In one embodiment, the aggregator server 200 may send a request to aggregator FI 132 to make a low-value transfer of funds (such as $0.01) to the account nominated by the merchant, the transfer having a reference code generated by and only known to registration module 236, and subsequently send a request to merchant device 110 to confirm that the funds have been received in their account, by the merchant entering the received reference code and confirming that it matches the generated reference code.

Once the bank account details have been confirmed, registration module 236 generates a merchant identifier (step 610), and invokes account management module 234 to create (step 612) a record for the merchant in merchant database 212, the record including the merchant name, bank account details, contact details, and merchant identifier. As part of record creation, one of the existing VCNs previously requested by aggregator system 130 is assigned to the generated merchant identifier, such that the assigned VCN also forms part of the merchant record in merchant database 212. Accordingly, as merchants are added to the system, a plurality of merchant identifiers is associated with one of the VCNs.

In some embodiments, code generator 242 generates (step 614) a machine-readable code which encodes at least the virtual card number, an identifier of the aggregator 130, and the merchant identifier. The machine-readable code may be an optical code such as a 1-dimensional barcode or a matrix barcode such as a QR code. If the machine-readable code is a QR code, it may be generated according to the EMV® QR Code Specification for Payment Systems: Merchant-Presented Mode, the aggregator identifier may be encoded in Tag 04 of the QR code payload, and the merchant identifier may be encoded in Tag 62 (e.g. in an otherwise unused sub-field thereof). Once generated, the code generator 242 transmits (via transmitting unit 206) the machine-readable code to the merchant device 110 at step 616, and writes it to the merchant's record in database 212. The machine-readable code is stored by merchant app 532 so that the merchant device 110 can present the machine-readable code to user devices 120 for the purposes of initiating a transaction. This type of code is called a static code, since it is the same for every transaction. Advantageously, a static code may be printed so that the merchant can display it at the point of sale for scanning by users 120.

In other embodiments, aggregator server 200 may simply send the assigned VCN and merchant identifier to merchant device 110, and the merchant app (via code generator 538) may generate the machine-readable code, store it on storage unit 520, and transmit the generated code back to aggregator server 200 for writing to the merchant's record in database 212.

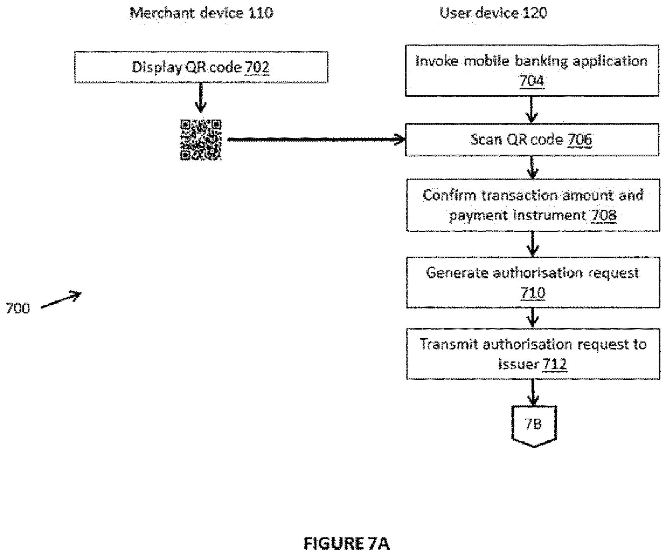

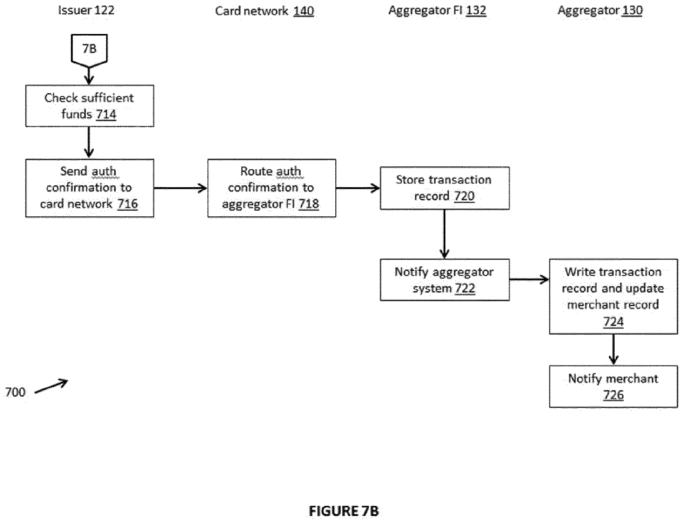

Turning to Figures 7A to 7C, an example process flow for a transaction process 700 carried out by user device 120 is shown. At step 702, the merchant displays a QR code for scanning by the user device 120. The QR code may be a static code as described above, and may be in printed form, or may be caused to display on display 506 of merchant device 110 by merchant app 532.

Alternatively, the merchant app 532 may generate a dynamic code. To do this, transaction manager component 536 may generate a transaction identifier, and prompt for entry of a transaction amount, or may retrieve, from a database of items on the storage unit 520 of merchant device 110, one or more item amounts based on a selection (for example via touch screen interface 506) by a user of merchant device 110. The transaction amount may thus be automatically determined as the total of the one or more item amounts for the selection. The code generator component 538 may then generate a QR code containing the merchant's virtual card number, the merchant identifier, the amount, and the transaction ID, and cause the QR code to be displayed on display 506 such that the code reader module 432 of user device 120 can capture the QR code (by controlling camera 408) and decode it to obtain data elements needed to generate a transaction request. Alternatively, these data elements may be encoded as part of the payload of an NDEF message, which can then be read by an NFC controller of user device 120. Other data elements relating to characteristics of the transaction (such as details of the actual items being purchased, also known as SKU data) may also be encoded by code generator 538.

At step 704, the user invokes mobile banking application (MBA) 436 and indicates that they wish to initiate a transaction with a QR merchant. MBA 436 invokes code reader module 432 of user device 110 to control camera 408 to scan the merchant's QR code (step 706). In the case of a static QR code, the user then enters, in MBA 436, the amount that they wish to pay to the merchant. In the case of a dynamic QR code, the amount will be pre-populated in MBA 436.

At step 708, the user confirms the transaction amount and selects a payment instrument (such as a debit card) within MBA 436 that is to be used for the transaction. At step 710, MBA 436 uses the primary account number (PAN) of the selected payment instrument to form an authorisation request message, for example in ISO 8583 format. The authorisation request message also encodes the VCN to which payment is to be made, the merchant identifier of the aggregator 130 (typically in data element 42), and the merchant identifier corresponding to the VCN (for example, in data element 108 and appropriate sub-fields thereof, though any data element which is not already used for other purposes may store the merchant identifier). At step 712, MBA 436 sends the authorisation request to the issuer 122 of the payment instrument.

At step 714, the issuer 122 checks whether sufficient funds are available to complete the transaction. If so, the issuer 122 sends (step 716) an authorisation confirmation message to card network 140 to indicate that the transaction has been successful. The authorisation confirmation message encodes transaction data including the transaction ID, transaction amount, transaction timestamp, VCN and merchant identifier. Card network 140 parses the authorisation confirmation message, determines the aggregator FI 132 corresponding to the VCN, and routes the authorisation confirmation message to the aggregator FI 132 (step 718).

The transaction processor 330 of processing server 300 of aggregator FI 132 receives the authorisation confirmation message and stores a transaction record in database 350 (step 720). Transaction processor 330 parses the confirmation message, extracts the transaction data from it, and invokes notification module 326 to sends (step 722) an approval notification to an aggregator server 200 of the aggregator system 130.

Transaction module 238 of the aggregator server 200 receives the transaction data and writes it to database 212. In addition, the merchant record corresponding to the merchant identifier of the transaction data is updated to reflect that the transaction amount of the approved transaction is owed to the merchant (step 724). By retrieving the merchant's contact details from database 212, the aggregator server 200 can also send a notification (step 726) to the merchant device 110 to indicate completion of the transaction, such that the merchant can release goods or provide services to the user of user device 120.

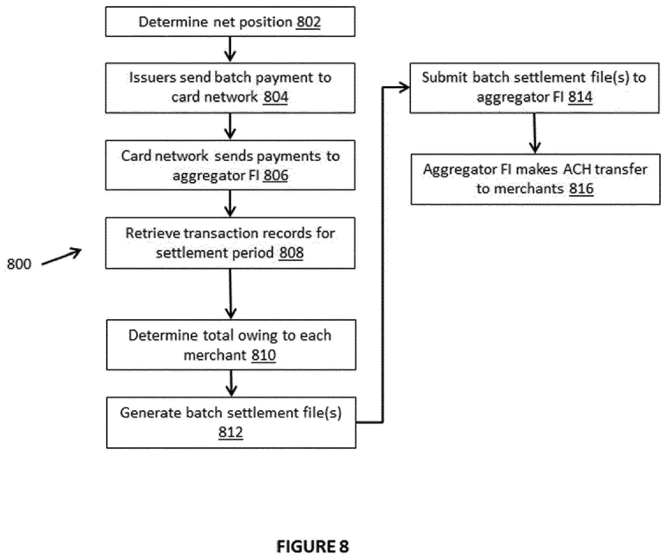

Referring now to Figure 8, there is shown a two-stage settlement process 800, which may be conducted on a periodic basis, such as on a two-hourly or daily basis. The first stage of the settlement process involves processing of all transactions (as described above) in a given period to determine the net position (step 802) between each issuer 122 and aggregator FI 132. Subsequently, at step 804, each issuer 122 sends a batch payment for aggregator FI 132 to card network 140. The card network 140 subsequently passes this on at step 806 to aggregator FI 132. Finally, aggregator FI 132 posts funds to the aggregator's account.

In the second settlement stage, transaction module 238 of aggregator server 200 retrieves transaction records (step 808) from database 212 for the given period.

At step 810, transaction module 238 groups the transaction records by merchant, and determines, for each merchant, a total amount owing, based on the amounts of the individual transactions conducted in relation the respective merchant identifiers.

Next, at step 812, transaction module 238 retrieves the bank account details for the respective merchants, and generates a batch settlement file which includes settlement instructions comprising the total amount owing to each merchant, and the bank account of each. The settlement instructions may be grouped according to respective banks corresponding to the bank accounts. In that case, a separate batch settlement file may be generated for each destination bank.

At step 814, transaction module initiates one or more batch transfers of funds to the respective merchants, by submitting one or more batch settlement files to aggregator FI 132. Aggregator FI 132 effects transfers from the aggregator's settlement account to respective merchants based on the settlement instructions, via automated clearing house (ACH) network 150 (step 816).

In some embodiments, step 808 may commence simultaneously with step 802, such that the first and second stages proceed in parallel. The aggregator system 130 may start the aggregator to merchant settlement process (second stage) at a convenient time after it has received approved transaction notifications, provided sufficient funds are available in the aggregator's settlement account to begin initiating transfers to merchants.

Embodiments of the invention provide a high efficiency, low cost approach for scaling the acceptance of electronic payments to micro merchants. Embodiments may provide one or more of the following advantages:
A. QR Code Based Merchant Payment Solution: By utilizing Quick Response (QR) Codes rather than Point of Sale (POS) Terminals the model eliminates the need for costly terminals while leveraging the high proliferation of mobile phones as a payment instrument. To accept payments all a merchant needs to do is display the QR code.
B. FinTech Merchant Aggregator: By leveraging third parties focused on last mile merchant acquisition and facilitating merchant onboarding via a smart phone based application, the model provides a platform for scale by addressing the challenges of traditional distribution models (i.e. face to face registration of merchants).
C. Specialized Merchant Repository: Some embodiments incorporate a location based central database/listing service where merchants can promote their businesses to consumers who have mobile payment solutions powered by a wallet such as Masterpass QR™ of Mastercard International Incorporated. Listing on this central repository provides these merchants with a low cost channel for accessing markets/customers as these consumers are able to search for businesses via their mobile payment engines.
D. Omni-Account Settlement: Some embodiments allow settlement into any account or mobile money wallet selected by the merchant. This solves the challenge of restriction where merchants are typically required to bank with financial institutions who are partnered with payment networks such as Mastercard and who can therefore provide access to services provided by the payment network.
E. Framework for Sub Merchant Management: Some embodiments solve for the challenge of identifying, notifying and settling transactions conducted by merchants on-boarded through the aggregator model for QR based payments. This is done by providing a consistent way for all stakeholders i.e. Originating Institutions, Consumers, Receiving Institutions, Merchants, Merchant Aggregators and payment networks (e.g. Mastercard) to manage transactions.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more generators, processors, and/or other devices) cause the processor (the one or more generators, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded generator devices, personal generators, server generators (specific or cloud (virtual) servers), hand-held or laptop devices, multiprocessor systems, microprocessor-based systems, set top boxes, programmable consumer electronics, mobile telephones, network PCs, minigenerators, mainframe generators, distributed generating environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

## Claims

1. A method comprising, at an aggregation server:
allocating, in a merchant database, a virtual card number to a plurality of merchants, each merchant being assigned a merchant identifier, the virtual card number being associated with a settlement account maintained by an acquirer processor system;
receiving, from one or more issuer processor systems which maintain payment card accounts, a plurality of confirmation messages each indicating a successful payment to the virtual card number from one or more of the payment card accounts, each confirmation message including a merchant identifier of one of the plurality of merchants;
determining a merchant account for each merchant based on the respective merchant identifiers from the confirmation messages; and
submitting a batch settlement request message to the acquirer processor system to initiate a transfer of funds from the settlement account to respective merchant accounts based on the respective merchant account identifiers.

2. A method according to claim 1, wherein the batch settlement request message is submitted on a periodic basis.

3. A method according to claim 1 or claim 2, further comprising receiving, from a merchant device, a request to create an account at the aggregation server.

4. A method according to claim 3, comprising generating a new merchant identifier for the merchant device, and allocating the virtual card number to the new merchant identifier in the merchant database.

5. A method, comprising:
providing, at an aggregation server, a merchant database comprising a mapping of a virtual card number to a plurality of merchants, each merchant being assigned a merchant identifier, the virtual card number being associated with a settlement account maintained by an acquirer processor system;
generating, at a computing device, a payment request message comprising the virtual card number, a selected merchant identifier of said merchant identifiers, and a payment card account number;
transmitting, from the computing device, the payment request message to effect a transfer from the payment card account to the virtual card number;
responsive to receipt of a payment authorisation response message indicating a successful transfer, transmitting, to the aggregation server, a confirmation message indicating a successful payment to the virtual card number from the payment card account, the confirmation message including the selected merchant identifier;
determining a merchant account based on the merchant identifier from the confirmation message; and
submitting a settlement request message to the acquirer processor system to initiate a transfer of funds from the settlement account to the merchant account.

6. A method according to claim 5, wherein the settlement request message is a batch settlement request message which is submitted after receipt of a plurality of confirmation messages, respective confirmation messages comprising respective merchant identifiers.

7. A method according to either of claims 5 or 6, further comprising:
generating or otherwise providing a machine-readable code which encodes first partial payment data;
reading, in a secure environment at the computing device, the machine-readable code;
accessing, at the computing device, second partial payment data which are distinct from the first partial payment data;
wherein the payment request message is generated from the first partial payment data and the second partial payment data.

8. A method according to claim 7, wherein the machine-readable code is generated by a merchant device and the first partial payment data comprises the virtual card number and the selected merchant identifier of said merchant identifiers.

9. A method according to claim 7, wherein the machine-readable code is generated by a user device and the first partial payment data comprises the payment card account number.

10. An aggregation server comprising at least one processor and a memory storing computer-readable instructions which, when executed, cause the at least one processor to:
allocate, in a merchant database, a virtual card number to a plurality of merchants, each merchant being assigned a merchant identifier, the virtual card number being associated with a settlement account maintained by an acquirer processor system;
receive, from one or more issuer processor systems which maintain payment card accounts, a plurality of confirmation messages each indicating a successful payment to the virtual card number from one or more of the payment card accounts, each confirmation message including a merchant identifier of one of the plurality of merchants;
determine a merchant account for each merchant based on the respective merchant identifiers from the confirmation messages; and
submit a batch settlement request message to the acquirer processor system to initiate a transfer of funds from the settlement account to respective merchant accounts based on the respective merchant account identifiers.

11. An aggregation server according to claim 10, wherein the at least one processor is configured to receive, from a merchant device, a request to create an account at the aggregation server.

12. An aggregation server according to claim 11, wherein the at least one processor is configured to generate a new merchant identifier for the merchant device, and allocate the virtual card number to the new merchant identifier in the merchant database.

13. A system, comprising:
a computing device which is configured to:
generate a payment request message comprising a virtual card number, a selected merchant identifier of said merchant identifiers, and a payment card account number; and
transmit, to a payment network via an acquirer processor system or an issuer processor system, the payment request message to effect a transfer from the payment card account to the virtual card number; and an aggregation server comprising:
at least one processor; and
a merchant database comprising a mapping of a virtual card number to a plurality of merchants, each merchant being assigned a merchant identifier, the virtual card number being associated with a settlement account maintained by an aggregator acquirer processor system;
wherein the at least one processor is configured to:
receive a confirmation message indicating a successful payment to the virtual card number from the payment card account, the confirmation message including the selected merchant identifier;
determine a merchant account based on the merchant identifier from the confirmation message; and
submitting a settlement request message to the aggregator acquirer processor system to initiate a transfer of funds from the settlement account to the merchant account.

14. A system according to claim 13, wherein the aggregation server is configured to submit a batch settlement request message after receipt of a plurality of confirmation messages, respective confirmation messages comprising respective merchant identifiers.

15. A non-transitory computer-readable medium having stored thereon computer-readable instructions which, when executed by at least one processor, cause the at least one processor to carry out a method according to any one of claims 1 to 9.
